(19) Europäisches Patentamt
European Patent Office
Office européen des brevets

(11) **EP 1 233 041 B1**

(12) **EUROPÄISCHE PATENTSCHRIFT**

(45) Veröffentlichungstag und Bekanntmachung des Hinweises auf die Patenterteilung:
**30.05.2012 Patentblatt 2012/22**

(51) Int Cl.:
*C08L 97/02* *(2006.01)*   *B44C 5/04* *(2006.01)*
*B32B 21/04* *(2006.01)*

(21) Anmeldenummer: **02002045.9**

(22) Anmeldetag: **08.02.2002**

(54) **Dekorative Platte und/oder Formteil, deren Verwendung und Verfahren zu deren Herstellung**

Decorative panel and/or moulding, its use and process for its production

Panneau et/ou moulage décoratif, son utilisation et procédé pour l'obtenir

(84) Benannte Vertragsstaaten:
**AT BE CH CY DE DK ES FI FR GB GR IE IT LI LU MC NL PT SE TR**

(30) Priorität: **14.02.2001 DE 10106762**

(43) Veröffentlichungstag der Anmeldung:
**21.08.2002 Patentblatt 2002/34**

(73) Patentinhaber: **Trespa International B.V.**
**6002 SM Weert (NL)**

(72) Erfinder:
• **Schuren, Geer**
**6097 BT Heel (NL)**
• **Van der Vorst, Chris**
**6061 AG Posterholt (NL)**

(74) Vertreter: **Dohmen, Johannes Maria Gerardus et al**
**Algemeen Octrooi- en Merkenbureau**
**P.O. Box 645**
**5600 AP Eindhoven (NL)**

(56) Entgegenhaltungen:
**EP-A- 0 029 335    EP-A- 0 081 147**
**DE-A- 2 315 145    FR-A- 1 470 329**
**FR-A- 2 117 512    FR-A- 2 432 383**
**US-A- 5 502 088**

• **PATENT ABSTRACTS OF JAPAN vol. 015, no. 260 (M-1131), 2. Juli 1991 (1991-07-02) & JP 03 087250 A (MITSUI TOATSU CHEM INC), 12. April 1991 (1991-04-12)**

**Beschreibung**

Die Erfindung betrifft eine dekorative Platte und/oder ein Formteil, insbesondere für Innen- und Außenanwendung an Gebäuden geeignet, aus einer ein- oder beidseitig mit einer Dekorschicht laminierten, gepressten ein- oder mehrlagigen Kernschicht aus Holz- und/oder Zellulosefasern oder Holzsägemehlprodukten, wobei die Fasern bzw. die Holzsägemehlprodukte mit einem Harz als Binder imprägniert und von dem hitzegehärteten Binder umgeben sind sowie ihre Verwendung und ein Verfahren zur Herstellung einer derartigen Platte.

Im Stand der Technik sind Platten aus Holzspänen und Holzfasern mit einer Matrix von Aminoplast oder Phenolharzen oder Zement und auch Sperrholzplatten bekannt, die eine gleichmäßige Dichte zeigen und für die Außenanwendung oder feuchte Innenanwendung geeignet sind. Derartige Platten sind jedoch im Gegensatz zu Schichtstoffplatten nicht wartungsfrei und müssen wegen starker Wasseraufnahme durch die nicht-geschlossene Oberfläche regelmäßig allseitig nachbehandelt werden. Durch Wasseraufnahme kann es zu einer starken Quellung unter Zunahme der Plattendicke kommen. Derartige Platten besitzen eine geringe Festigkeit und sind nicht dekorativ. Üblicherweise besteht der Kern von Festplatten aus Natronkraftpapier und einem Phenolharz ohne Dekorschicht oder mit einer Dekorschicht an einer oder beiden Oberflächen des Kerns. Hitzehärtbare Harze werden unter hohem Druck und hoher Temperatur gehärtet und bilden zusammen mit dem Natronkraftpapier eine feste homogene integrierte Platte. Derartige Platten werden als HPL- oder sogenannte Hochdrucklaminat-Platten bezeichnet.

In der US-A 3 673 020 (DE-A 19 12 300) ist ein plattenförmiges dekoratives Formteil aus Holzsägespänen beschrieben, das eine Matrix aus Phenolharz enthält, wobei der Harzgehalt zwischen 5 und 15 Gew.-%, bezogen auf das Trockengewicht der Holzspäne, beträgt. Die Witterungsbeständigkeit dieses Formteils ist wenig zufriedenstellend. Bei Bewitterungsversuchen kommt es zu starker Wasseraufnahme und entsprechender Randquellung und Aufspaltung des gepressten Kerns, wodurch schon nach wenigen Wochen Rissbildungen an der Oberfläche auftreten.

Aus der EP-B 0 081 147 (US-A4 503 115) ist eine dekorative Bauplatte bekannt, die aus einem gepressten Kern aus Holzteilchen besteht, die von hitzegehärtetem Phenol-Formaldehydharz umgeben sind. Die Bauplatte weist auf einer oder beiden Oberflächen des Kerns dekorative Schichten auf, die aus einem Gewebe, Vlies, Stoff, einer Kunststoff-, Papier- oder Holzfolie und/oder aus einer Lackschicht bestehen. Die Holzfasern und/oder Zellulosefasern des Kerns besitzen eine maximale Länge von 20 mm, wobei die Holzfasern mit dem hitzehärtbaren Phenol-Formaldehydharz in wäßriger Lösung oder Dispersion beschichtet sind. Der Harzanteil beträgt mehr als 150 g und reicht bis zu 900 gje 1000 g Trockenfasern. Der Wassergehalt der Holzfasern liegt in der Größenordnung von 3 bis 10 Gew. -% und die Dichte der Bauplatte beträgt 1100 bis 1500 kg/m$^3$. Insbesondere besteht die dekorative Schicht aus einer mit Melamin-Formaldehydharz getränkten Dekorfolie mit einem Flächengewicht von 80 bis 400 g/m$^3$. Die Dekorschicht enthält gegebenenfalls einen Füllstoff und/oder einen Farbstoff. Erfolgt die Dekoration des gepressten Kerns an der Oberfläche durch Lackierung mit einem vernetzten Acryl-, Urethan-, Epoxid- oder Melaminharz so enthält diese Lackierung gegebenenfalls einen Füllstoff und/oder einen Farbstoff.

Diese dekorative Bauplatte wird in der Weise hergestellt, daß eine oder mehrere übereinander angeordnete, mechanisch vorverdichtete Schichten auf der Basis von Holzfasern zu dem Kern der Bauplatte in der Hitze verpresst werden, wobei das hitzehärtbare Phenol-Formaldehydharz der vorverdichteten Schichten gehärtet wird. Eine oder beide Oberflächen des Kerns werden mit einer Dekorschicht ausgerüstet, die entweder auf die vorverdichtete Matte aus mehreren Schichten oder nach dem Verpressen dieser Matte zu dem Kern auf diesen aufgebracht wird.

Diese bekannte Bauplatte hat in Längs- und Querrichtung eine sehr gleichmäßige Maßbeständigkeit und zeigt selbst unter stark wechselnden Witterungseinflüssen eine große Dimensionsstabilität. Gegenüber anderen bekannten Platten aus Holzspänen und -fasern oder Zellulosefasern besitzt diese Bauplatte jeweils eine höhere Biege-, höhere Zug- und Querfestigkeit, eine höhere Maßbeständigkeit und eine verringerte Wasseraufnahme. Diese Bauplatte ist ein Laminat aus vorverpressten Holzfasern-Harz-Schichten und Dekorschichten und hat wegen der witterungsbeständigen Dekorschichten, die die Oberflächen des Kerns abdecken, über lange Zeit ein unverändertes Farbaussehen.

In HPL-Platten erfüllt das Harz ein Doppelfunktion, die darin besteht, dass erstens die Holzund/oder Zellulosefasern gebunden werden und zweitens der Raum zwischen den Fasern gefüllt. wird. In den bekannten Fest- oder HPL-Platten werden für die Bindung der Fasern und für die Füllung des Raums zwischen den Fasern vorkondensierte Phenolharze eingesetzt.

FR-A-1 470 329 offenbart eine Platte aus Holzsägespänen, die durch eine Imprägnierung mit Bindemitteln und eine Pressung agglomeriert werden. Die Kernschicht enthält ein Füllmittel (feines und selbst sehr feines Asbestpulver). In dem Fall einer dekorativen Platte kann ein dekoratives Furnier auf der Holzsägespänekernschicht aufgelegt und geklebt werden. Die Wasserfestigkeit der Platte ist überraschenderweise viel besser als die von einer Platte ohne Füllmittel: insbesondere wird die Wasserquellung niedriger. In einem Beispiel, werden 3 kg Harnstoff-Formaldehyd Harz *(Kaurit)* mit 1,750 kg Asbestpulver so fein wie Talkpulver gemischt, und diese Mischung wird dann zu 20 kg trockenen Holzsägespänen gegeben. Von diesem Gemisch wird bei gewöhnlichen Temperatur- und Pressierungsbedingungen eine Platte hergestellt. Diese Platte kann als Innenwand verwendet werden.

Aufgabe der Erfindung ist es, eine Platte der eingangs beschriebenen Art so zu verbessern, dass verschiedene physikalische Eigenschaften einstellbarsind, insbesondere feuchtigkeitsab weisende Eigenschaften verstärkt sind, ohne dass bei den mechanischen Eigenschaften derPlatte zu starke Einbußen eintreten.

Diese Aufgabe wird erfindungsgemäß durch die eingangs beschriebene Platte in der Weise gelöst, dass die Kernschicht ein Füllmaterial enthält, dessen Partikelgröße kleiner als die Dicke der Fasern oder der Holzsägemehlprodukte ist und dass die Partikelgröße des Füllmaterials im Bereich von 1 bis 250 μm liegt und dass die Kernschicht 25 bis 75 Gew.-% Fasern oder Holzsägemehlprodukte, 20 bis 50 Gew.-% Füllmaterial und 15 bis 35 Gew.-% Harz, jeweils bezogen auf das Gesamtgewicht der Kernschicht, umfasst.

Zweckmäßigerweise ist das Füllmaterial thermisch stabil bis zu 200 °C, weder hydrolysierbar noch hygroskopisch und besteht aus anorganischem oder organischem Material.

Bei den üblicherweise auf dem Markt erhältlichen Holzsägemehlprodukten handelt es sich beispielsweise um Holzsägemehl, faseriges Holzsägemehl, Pellets, die aus Holzsägemehl hergestellt sind und dergleichen Produkte.

In Ausgestaltung der Erfindung liegt die Partikelgröße des Füllmaterials im Bereich von 1 bis 250 μm, insbesondere von 5 bis 50 μm, während die Holz- und/oder Zellulosefasern eine Länge von 0,3 bis 30 mm, eine mittlere Länge von 0,5 bis 3 mm und einen mittleren Durchmesser von 10 μm bis 500 μm besitzen.

In Weiterbildung der Erfindung ist das Füllmaterial aus einer Gruppe anorganischer Materialien auswählbar, die unter anderem Talkum, Kreide, Dolomit, Aluminiumhydroxid, Magnesiumhydroxid, Bariumsulfat, Perlit, Diatomit, Glimmer, Calciumkarbonat und Mischungen hiervon umfasst. Zweckmäßigerweise besteht das Füllmaterial aus organischen Materialien, wie gemahlene HPL-Plattenreste, Sägemehl von HPL-Platten, das beim Plattenschneiden anfällt und/oder gemahlene gebrauchte HPL-Platten, Holzsägemehlprodukte, Holz- und/oder Zellulosefasern.

Die weitere Ausgestaltung der Erfindung ergibt sich aus den Merkmalen der Patentansprüche 6 bis 10.

Derartige Platten finden Verwendung zur Außenverkleidung von Gebäuden in Form einer vorgehängten Fassade, Wand- und Dachblende, Brüstungsplatte oder Balkonverkleidung sowie für Innenverkleidungen bzw. Innenanwendung bei Wänden, Möbel, Naßräumen, Laboreinrichtungen und dergleichen.

Bei dem erfindungsgemäßen Verfahren zur Herstellung einer solchen Platte werden eine oder mehrere mechanisch vorverdichtete Lagen aus Zellulose- und/oder Holzfasenr oder Holzsägemehlprodukten, die von einem hitzehärtbaren Harz eingeschlossen sind, übereinander liegend und mit an einer oder beiden Oberflächen der zusammengefügten Lagen anliegenden Dekorschicht(en) unter Hitze miteinander verpresst, wobei das Harz gehärtet wird und vor dem Vorverdichten der Lage(n) in einem ersten Schritt Füllmaterial mit den Fasern oder Holzsägemehlprodukteoder mit dem Harz vermischt wird und in einem zweiten Schritt Harz bzw. Fasern oder Holzsägemehlprodukte hinzugemischt werden.

Die Herstellung der Holzfasern für die Lagen, die zu dem Kern verpresst werden, ist in EP-B 0 081 147 ausführlich beschrieben, deren Offenbarungsgehalt in die vorliegende Beschreibung mit aufgenommen wird. Die Kernschicht besteht aus einer oder mehreren Lagen aus Holzund/oder Zellulosefasern, wobei der Anteil der Fasern zwischen 15 und 80 Gew.-%, bevorzugt zwischen 25 bis 75 Gew.-%, bezogen auf das Gesamtgewicht der Kernschicht, beträgt. Im Allgemeinen wird die Kernschicht aus einer bis drei Lagen zusammengefügt. Den Holzund/oder Zellulosefasern wird ein Füllmaterial mit mindestens 10 Gew.-% bis zu maximal 75 Gew.-%, bezogen auf das Gesamtgewicht der Kernschicht, hinzugefügt. Bevorzugt ist für das Füllmaterial ein Bereich von 20 bis 50 Gew.-%. Eine weitere Komponente der Kernschicht ist ein Harz zum Beschichten der Holz- und/oder Zellulosefasern sowie des Füllmaterials. Bei diesem Harz handelt es sich bevorzugt um ein Phenol-Formaldehydharz, aber auch andere Harzsysteme wie z. B. ein Melamin- oder Epoxidharz sind verwendbar. Der Harzanteil beträgt im Allgemeinen 10 bis 50 Gew.-%, bezogen auf das Gesamtgewicht der Kernschicht, bevorzugt ist ein Anteil von 15 bis 35 Gew.-%. Das Einbringen des Füllmaterials kann auf verschiedene Art und Weise erfolgen, wobei verschiedene Reihenfolgen des Mischens möglich sind:

- In einem ersten Schrittwerden die Fasern und das Füllmaterial miteinander gemischt und in einem zweiten Schritt wird das Harz hinzugefügt.

- In einem ersten Schritt werden die Fasern und das Harz miteinander gemischt und in einem zweiten Schritt wird das Füllmaterial hinzugefügt.

- In einem ersten Schritt werden das Füllmaterial und das Harz miteinander gemischt und in einem zweiten Schritt werden die Fasern hinzugefügt.

Bevor die Holz- und/oder Zellulosefasern mit den übrigen Bestandteilen gemischt werden, können sie einer chemischen Reaktion mit Formaldehyd unterzogen werden, beispielsweise durch eine Dampfbehandlung bei 3 bis 10 bar und einer Temperatur von 80 bis 180 °C. Noch im feuchten Zustand oder nach der Trocknung werden die so behandelten Holz- und/oder Zellulosefasern mit dem Füllmaterial und mit dem Harz gemischt. Hierfür besonders geeignete Phenol-Formaldehyharze sind in der EP-B 0 081 147 beschrieben, ebenso bekannte flammwidrige Additive, die dem Harz zugesetzt werden. Die Mischung aus Fasern, Füllmaterial und Harz wird beispielsweise mit Heissluft getrocknet bis zu einer Restfeuchte von 0,5 bis 10 Gew.-%, vorzugsweise 1,5 bis 2,5 Gew.-%, wobei das Harz teilweise aushärtet.

Nach der Trocknung wird die Mischung gelagert oder direkt zu einer Streueinrichtung gebracht. Die Mischung wird kontinuierlich gleichmäßig in Streulage auf einem horizontalen Transportband abgelegt, so dass sie über die gesamte Breite verteilt ist und ein vliesstoffartige Matte entsteht, die zu einem Vorpressling vorgepresst wird. Ein oder mehrere derartiger Vorpresslinge (prepregs) werden an der Oberfläche ein- oder beidseitig mit einer Dekorschicht zusammengefügt und unter hohem Druck von 65 bis 100 bar bei einer Temperatur von 120 bis 200 °C, insbesondere 150 °C, zu einer dekorativen Platte verpresst. Während des Pressens entsteht durch Aushärten des Harzes eine vernetzte, homogene Schicht aus Holz- und/oder Zellulosefasern und Füllmaterial.

Als Fasermaterial werden überwiegend rohe Holzfasern eingesetzt, aber auch chemisch, hitzemäßig, feuchtigkeitsmäßig und mikrobiologisch behandelte Holzfasern. Anstelle von Fasermaterial können auch Holzsägemehlprodukte eingesetzt werden, die jedoch im allgemeinen zu einer geringen Reduktion der Eigenschaften der Platte, verglichen mit Fasermaterial, führen. Für die Herstellung von Fasern sind Weich- und Harthölzer geeignet, die beispielsweise in Gestalt von Holzschnitzeln in einem Dampfkessel mit Wasserdampf bei einem Druck von 1 bis 10 bar erweicht und anschließend zu Fasern zerkleinert werden, die eine Länge von 0,3 bis 30 mm, eine mittlere Länge von 0,5 bis 3 mm und einen mittleren Durchmesser von 0,010 bis 0,5 mm besitzen. Werden Zellulosefasern eingesetzt, so sind deren Längen und Durchmesser etwa in den gleichen Bereichen wie bei den Holzfasern. Holzsägemehlprodukte sind im Markt in Form von Mehl, faserigem Mehl und Pellets erhältlich und können gleichfalls für die Herstellung der Kernschichten einer Platte eingesetzt werden. Die bevorzugte Partikelgröße ist kleiner als 500 $\mu$m und das Längen-/Durchmesserverhältnis für das Fasermaterial in denMischungen aus Holz-, Zellulosefasern, Mehl oder Pellets ist bevorzugt größer als 10.

Als Harz werden hitzehärtbare Harze wie beispielsweise Phenol-Formaldehydharz, Melamin-Epoxidharz, Harze mit Harnstoff-Einheiten, Harze mit Isocyanat-Einheiten und Mischungen von derartigen Harzen eingesetzt. Bevorzugt wird für die Kernschicht der Platte ein reiner oder modifizierter Novolak oder ein Resoltyp verwendet.

Als Füllmaterial werden übliche anorganische Füllmaterialien und organische Füllmaterialien wie beispielsweise gemahlenes HPL-Restmaterial eingesetzt. Wesentlich für die Verwendung des Füllmaterials ist dessen Partikelgröße. Diese Größe muss kleiner als die Dicke der Fasern oder der Holzsägemehlprodukte sein. Eine allgemeine Partikelgrößenverteilung der anorganischen Füllmaterialien liegt bevorzugt zwischen 1 und 50 $\mu$m mit einer mittleren Verteilung im Bereich zwischen 5 und 10 $\mu$m. Für gemahlenes HPL-Restmaterial und gemahlenes hitzegehärtetes Harz liegt die allgemeine Partikelgrößenverteilung im Bereich von 1 bis 250 $\mu$m, bevorzugt in einem Mittelwert-Bereich von 20 bis 50 $\mu$m. Die verwendeten Füllmaterialien müssen mit dem Harz und mit den Fasern kompatibel sein und dürfen nur einen begrenzten Einfluss auf die Aushärtung des Harzes besitzen. Des Weiteren sind die Füllmaterialen weder hygroskopisch noch hydrolysierbar und sind darüber hinaus bis zu Temperaturen von 200 °C thermisch stabil.

Anorganische Füllmaterialien, die verwendet werden können, sind beispielsweise Talkum, Kreide, Dolomit, Aluminiumhydroxid, Magnesiumhydroxid, Bariumsulfat, Perlit, Diatomit, Glimmer, Calciumkarbonat und Mischungen hiervon. Diese Aufzählung von anorganischen Füllmaterialien ist beispielhaft und keineswegs vollständig. Anorganische Materialien mit vergleichbaren Eigenschaften wie die aufgezählten Füllmaterialien sind gleichfalls als Füllmaterial gemäß der Erfindung geeignet. Gemahlene HPL-Reste ergeben Mehl, das auch bei der Maschinenbearbeitung von HPL-Platten anfällt, kleine Reststücke von HPL-Platten, die nach dem Schneiden bzw. Konfektionieren der Platten auf die vorgegebenen Größen zurückbleiben oder komplette, gebrauchte HPL-Platten, die gemahlen werden, liefern organisches Füllmaterial.

In der Standard-Fest- oder HPL-Platte ohne Füllmaterial hat der Binder eine Doppelfunktion, nämlich dass er erstens die Fasern bindet und zweitens den Raum zwischen den Fasern während des Pressens der Platte füllt. Überraschenderweise hat sich gezeigt, dass durch das Hinzufügen von Füllmaterial zu dem Gemisch aus Fasern und Harz eine Reduzierung der wesentlichen Platteneigenschaften nicht auftritt. Die Erklärung für dieses Phänomen könnte darin gesehen werden, dass das Füllmaterial während des Dauerpressvorgangs sich bewegt, um den Raum zwischen den Fasern auszufüllen. Daher ist weniger Bindemittel als für eine Platte ohne Füllmaterial notwendig, um die Platteneigenschaften auf einem hohen Wert zu halten. Der geringere Einsatz von Harz begünstigt daher die Beibehaltung hoher mechanischer und physikalischer Eigenschaften der Platten.

Die physikalischen Eigenschaften der erfindungsgemäßen Platte können durch Änderung der Füllmaterialtypen und durch Änderung des Anteils des Füllmaterials in dem Gemisch aus Harz, Fasern und Füllmaterial beeinflusst werden. Durch die Erfindung wird das Problem gelöst, durch eine ausgewählte Zusammensetzung der Ausgangsmaterialien Platten mit verbesserten Feuchteeigenschaften wie geringerer Wasseraufnahme und geringerer Volumenquellung bei nahezu gleichbleibenden mechanischen Eigenschaften zu erhalten. Der Füllmaterialtyp und der Anteil des Füllmaterials beeinflussen weitere Eigenschaften wie beispielsweise das Brandverhalten, die Farbe der Kernschicht, die Dichte und die Haltbarkeitsdauer, Schallabsorption, die Reduktion von Rauch und toxischen Gasen im Brandfall und die Reduktion der Durchlässigkeit für Strahlung (beispielsweise Röntgenstrahlen).

Durch den Ersatz eines Teils der harzgetränkten Fasern durch das Füllmaterial wird das Quellungsverhalten der hitzegehärteten Platte nahezu linear mit dem Anteil an Füllmaterial abgesenkt. Des weiteren beeinflusst das Aushärtungsverhalten des Harzes auch die hygroskopischen Eigenschaften der Platte. Die Auswahl des Füllmaterialtyps und dessen Anteil in der Fasern-Harz-Zusammensetzung werden so optimiert, dass der gleiche Grad der Harzhärtung, verglichen mit einer Standard-Festplatte, errreicht wird. Die Verpressbedingungen können für verschiedene Typen von Füllmaterial, abhängig von dem Einfluss des Füllmaterialtyps auf die Harzaushärtung, differenziert werden. Überraschend hat sich gezeigt, dass die mechanischen Eigenschaften der Platte bis zu einem Gewichtsanteil von 50 % an Füllmaterial nur sehr geringfügig beeinflusst werden. Noch höhere Gewichtsanteile des Füllmaterials erhöhen die Sprödigkeit, was sich durch einen niedrigeren Wert der Biegefestigkeit zeigt.

Das Flammfestigkeitsverhalten wird durch Absenken des organischen Füllmaterial-Anteils in der Platte erniedrigt und durch den Einsatz von spezifischen anorganischen Füllmaterialien mit flammverzögernden Eigenschaften, wie Aluminiumhydroxid und Magnesiumhydroxid, erhöht. Dies zeigt sich in einer niedrigeren Hitzefreisetzung pro $m^2$, verglichen mit einer Standard-Festplatte. Ebenso wird ein Absenken von Rauch und toxischen Gasen im Falle von Feuer durch den Einsatz spezifischer Füllmaterialien erreicht. Platten mit einem hohen Anteil von weißem Füllmaterial zeigen einen hell gefärbten Kern, der relativ stabil gegenüber Witterungs einflüssen ist. Durch Hinzufügen von Farbstoffen während der Plattenproduktion, bei der ein hoher Anteil von weißem Füllmaterial verwendet wird, ergibt sich die Gelegenheit dekorative Platten herzustellen, die einen gefärbten Kern besitzen und die ohne Oberflächen-Dekorschicht verwendet werden können und die gleiche Kern- und Oberflächenfarbe aufweisen.

Durch Hinzufügen von Füllmaterial hoher Dichte steigt die Dichte der Platte an. Derartige Platten mit hoher Dichte zeigen verbesserte Schallabsorptionseigenschaften. Die Reduktion von Strahlung (beispielsweise von Röntgenstrahlung) wird durch den Einsatz von speziellen Füllmaterialtypen wie beispielsweise von Blei und Bleikomponenten erzielt. Platten, die mit anorganischem Füllmaterial oder organischem gemahlenem HPL-Restmaterial hergestellt werden, besitzen niedrigere Nutzungsdauereigenschaften. Dies kommt dadurch zustande, dass ein Teil der Materialien mit hoher Nutzungsdauer, nämlich Harz und Fasern, durch ein Material mit niedriger Nutzungsdauer ersetzt wird.

Die Erfindung wird im Folgenden an Hand von Beispielen näher erläutert. Die in den Beispielen angeführte Volumenquellung wird wie folgt bestimmt:

Die Volumenquellung ist definiert als die Dimensionsänderung einer Probe in Länge, Breite und Dicke nach einer Bewitterung über 3600 h bei 40 °C und 100 % relativer Luftfeuchtigkeit. Die Berechnung der Volumenquellung erfolgt gemäß der Formel:

$$((\text{Länge} \cdot \text{Breite} \cdot \text{Dicke nach der Bewitterung}) / (\text{Länge} \cdot \text{Breite} \cdot \text{Dicke vor der Bewitterung})) \cdot 100\,\%$$

Flammfestigkeits-Test (cone calorie test):

Dieser Test erfolgte nach der ISO 5660 Methode und ist im übrigen in der deutschen Patentanmeldung 100 30 658.6-43 (00/101TRE) im einzelnen beschrieben. Die Beschreibung dieses Test gemäß dieser deutschen Patentanmeldung ist voller Bestandteil der vorliegenden Anmeldung.

Bei der Bestimmung der Volumenquellung einer Probe handelt es sich um einen internen Test der Patentanmelderin. Bei den übrigen in den Beispielen angeführten Testmethoden ist jeweils die hierfür verwendete Testmethode angegeben.

Die Dichte der Platten gemäß den Beispielen liegt im Bereich von 1200 bis 1950 kg pro $m^3$, die Dicke beträgt 2 bis 10 mm, insbesondere 6 bis 9 mm. Der Anteil an Füllmaterial liegt im Bereich von 10 bis 75 Gew.-%, der Harzanteil im Bereich von 20 bis 25 Gew.-% und der Faseranteil im Bereich von 5 bis 65 Gew.-%.

## BEISPIELE

### Beispiel 1

Eine Mischung aus einer Phenolharzlösung und Talkum (Westmin D 30 E von der Fa. Mondo Minerals OY, Kasarmikatu, Helsinki, (Finnland) wird mit Holzfasern gemischt und bis auf eine Restfeuchte von 2 Gew.-% getrocknet. Das faserartige Material wurde geformt und zu einem Vorpressling gepresst. Der Vorpressling wurde mit einer Dekorschicht auf beiden Seiten laminiert und mit einem Druck von 80 bar bei einer Temperatur von 150 °C gepresst, bis das gewünschte Grad der Harzaushärtung erreicht war. Auf diese Weise wurden folgende Zusammensetzungen der Platten vorbereitet:

**Tabelle 1**

| Platte | A | B | C | Einheiten | Testmethode |
|---|---|---|---|---|---|
| Füllmaterial: Talkum | 0 | 25 | 50 | Gew.-% | |
| Holzfasern | 70 | 55 | 30 | Gew.-% | |
| Harz | 30 | 20 | 20 | Gew.-% | |
| Dichte | 1365 | 1544 | 1788 | kg/m$^3$ | ASTM-D-792-91 |
| Dicke | 7,45 | 8,85 | 8,20 | mm | |
| E-Modul | 10280 | 12616 | 12907 | N/mm$^2$ | DIN 53457 |
| Biegefestigkeit | 160 | 143 | 128 | N/mm$^2$ | ISO 178 |
| Quellung in kochendem Wasser | 3,71 | 3,59 | 3,38 | % | EN 438-2 |
| Wasseraufnahme in kochendem Wasser | 0,72 | 0,61 | 0,51 | % | EN 438-2 |
| Volumenquellung | 7,81 | 6,13 | 4,79 | % | Trespa Test |
| Flammfestigkeits-Test (Wärmestrahlung 50 kW/m$^2$) Totale Wärmefreisetzung nach 10 min | 79 | 68 | 57 | MJ/m$^2$ | ISO 5660 |
| A ist eine Vergleichsprobe. | | | | | |

**Beispiel 2**

Eine Mischung aus einer Phenolharzlösung und gemahlenen HPL-Plattenresten wurde mit Holzfasern vermischt und bis auf einen Feuchtigkeitsgehalt von 2 Gew.-% getrocknet. Das faserige Material wurde geformtund zu einem Vorpressling verpresst. Dieser Vorpressling wurde mit einer Dekorschicht an beiden Seiten kombiniert und mit einem Druck von 80 bar und bei einer Temperatur von 150 °C zu einer Dekorplatte verpresst und zwar so lange bis der gewünschte Grad der Harzhärtung erreicht war. Es wurden folgende in Tabelle 2 angegebenen Zusammensetzungen für die Herstellung der Platten vorbereitet:

**Tabelle 2**

| Platte | D | E | F | G | Einheiten | Testmethode |
|---|---|---|---|---|---|---|
| Füllmaterial: gemahlene HPL-Stücke | 0 | 25 | 50 | 75 | Gew.-% | |
| Holzfasern | 70 | 55 | 30 | 5 | Gew.-% | |
| Harz | 30 | 20 | 20 | 20 | Gew.-% | |
| Dichte | 1366 | 1396 | 1369 | 1273 | kg/m$^3$ | ASTM-D-792-91 |
| Dicke | 7,09 | 8,00 | 6,33 | 6,72 | mm | |
| E-Modul | 10413 | 10488 | 9903 | 8912 | N/mm$^2$ | DIN 53457 |
| Biegefestigkeit | 156 | 148 | 130 | 81 | N/mm$^2$ | ISO 178 |
| Quellung in kochendem Wasser | 3,61 | 3,82 | 3,55 | 3,43 | % | EN 438-2 |
| Wasseraufnahme in kochendem Wasser | 0,69 | 0,72 | 0,65 | 0,62 | % | EN 438-2 |
| Volumenquellung | 7,72 | 7,54 | 7,36 | 7,63 | % | Trespa Test |
| D und G sind Vergleichsproben. | | | | | | |

**Beispiel 3**

Eine Mischung aus einer Phenolharzlösung und Dolomit ($CaMg(CO_3)_2$ : unter dem Handelsnamen Microdol 1 von der Fa. Norwegian Talc A. S. Knarrevik, Norwegen wurde mit Holzfasern gemischt und bis zu einer Restfeuchtigkeit von 2 Gew.-% getrocknet. Das faserige Material wurde geformt und zu einem Vorpressling verpresst. Dieser Vorpressling wurde an beiden Seiten mit je einer Dekorschicht kombiniert und mit einem Druck von 80 bar bei einer Temperatur von 150 °C so lange verpresst, bis der gewünschte Grad der Harzhärtung erreichtwar. Es wurden die folgenden Zusammensetzungen der Platten gemäß Tabelle 3 vorbereitet:

**Tabelle 3**

| Platte | H | I | J | K | L | Einheiten | Testmethode |
|---|---|---|---|---|---|---|---|
| Füllmaterial: Dolomit | 0 | 10 | 25 | 50 | 75 | Gew.-% | |
| Holzfasern | 70 | 65 | 50 | 30 | 5 | Gew.-% | |
| Harz | 30 | 25 | 25 | 20 | 20 | Gew.-% | |
| Dichte | 1405 | 1451 | 1547 | 1757 | 1939 | $kg/m^3$ | ASTM-D-792-91 |
| Dicke | 6 | 6 | 6 | 6 | 6 | mm | |
| E-Modul | 10326 | 10162 | 10831 | 11947 | 10805 | $N/mm^2$ | DIN 53457 |
| Biegefestigkeit | 156 | 155 | 145 | 126 | 71 | $N/mm^2$ | ISO 178 |
| Quellung in kochendem Wasser | 3,86 | 3,62 | 3,19 | 2,56 | 1,17 | % | EN 438-2 |
| Wasseraufnahme in kochendem Wasser | 0,66 | 0,52 | 0,45 | 0,38 | 0,24 | % | EN 438-2 |
| Volumenquellung | 7,60 | 7,18 | 5,59 | 4,09 | 2,26 | % | Trespa Test |
| Flammfestigkeits-Test (Wärmestrahlung 50 $kW/m^2$) Totale Wärmefreisetzung nach 10 min | 81 | 70 | 61 | 52 | 45 | $MJ/m^2$ | ISO 5660 |
| H, I und L sind Vergleichsproben. | | | | | | | |

**Beispiel 4**

Eine Mischung aus einer Phenolharzlösung und Aluminiumhydroxid ($Al(OH)_3$, unter dem Handelsnamen HN532 von der Fa. Huber Engineered Minerals erhältlich, wurde mit Holzfasern gemischt und bis auf eine Restfeuchte von 2 Gew.-% getrocknet. Das Fasermaterial wurde geformt und zu einem Vorpressling verpresst. Dieser Vorpressling wurde an beiden Seiten mit je einer Dekorschicht kombiniert und mit einem Druck von 80 bar bei einer Temperatur von 150 °C so lange verpresst, bis der gewünschte Aushärtungsgrad des Harzes erreicht war. Es wurden die folgenden Plattenzusammensetzungen gemäß der nachstehenden Tabelle 4 vorbereitet:

**Tabelle 4**

| Platte | M | N | Einheiten | Testmethode |
|---|---|---|---|---|
| Füllmaterial: $Al(0H)_3$ | 0 | 50 | Gew.-% | |
| Holzfasern | 70 | 30 | Gew.-% | |
| Harz | 30 | 20 | Gew.-% | |
| Dichte | 1365 | 1595 | $kg/m^3$ | ASTM-D-792-91 |
| Dicke | 7,45 | 8,29 | mm | |
| E-Modul | 10280 | 11803 | $N/mm^2$ | DIN 53457 |
| Biegefestigkeit | 158 | 131 | $N/mm^2$ | ISO 178 |
| Quellung in kochendem Wasser | 3,65 | 3,32 | % | EN 438-2 |
| Wasseraufnahme in kochendem Wasser | 0,65 | 0,56 | % | EN 438-2 |
| Volumenquellung | 7,92 | 4,21 | % | Trespa Test |

(fortgesetzt)

| Platte | M | N | Einheiten | Testmethode |
|---|---|---|---|---|
| Flammfestigkeits-Test (Wärmestrahlung 50 kW/m$^2$) Totale Wärmefreisetzung nach 10 min | 82 | 23 | MJ/m$^2$ | ISO 5660 |
| M ist eine Vergleichsprobe. | | | | |

Bei den in den Tabelle 1 bis 4 angeführten Testmethoden bezüglich der hygroskopischen und mechanischen Eigenschaften der Platten wurden die in den Tabellen angegebenen Standardtests angewandt.

In den Tabellen 1 bis 4 sind in Spalte 2 jeweils die Platten ohne Füllmaterial und in den folgenden Spalten die Platten mit steigendem Anteil des Füllmaterials aufgelistet.

In den Platten gemäß den Beispielen 1, 3 und 4 kommt jeweils ein anorganisches Füllmaterial in der Kerns chicht zum Einsatz, wobei das Füllmaterial mit steigendem Anteil in der Kerns chicht der Platten zu einer größeren Dichte der Platten, einer abnehmenden Wasseraufnahme, einer abnehmenden Volumenquellung, einer geringeren Wärmefreisetzung im Falle eines Plattenbrandes im Vergleich zu den Platten ohne Füllmaterial führt. Bis zu einem 50 %igen Gewichtsanteil des Füllmaterials in der Kernschicht der Platten nimmt die Biegefestigkeit der Platten nur geringfügig ab.

Bei den Platten des Beispiels 2 befindet sich ein organisches Füllmaterial aus gemahlenen HPL-Plattenresten in der Kernschicht. Mit steigendem Anteil des organischen Füllmaterials in der Kernschicht der Platten bleibt die Dichte der Platten nahezu konstant, nimmt die Wasseraufnahme ab, jedoch in geringerem Maß als bei anorganischem Füllmaterial und bleibt die Volumenquellung nahezu konstant. Die Wärmefreisetzung wurde für das Beispiel 2 nicht gemessen, da sie in etwa der Wärmefreisetzung einer Platte ohne Füllmaterial gemäß Beispiel 1 entspricht.

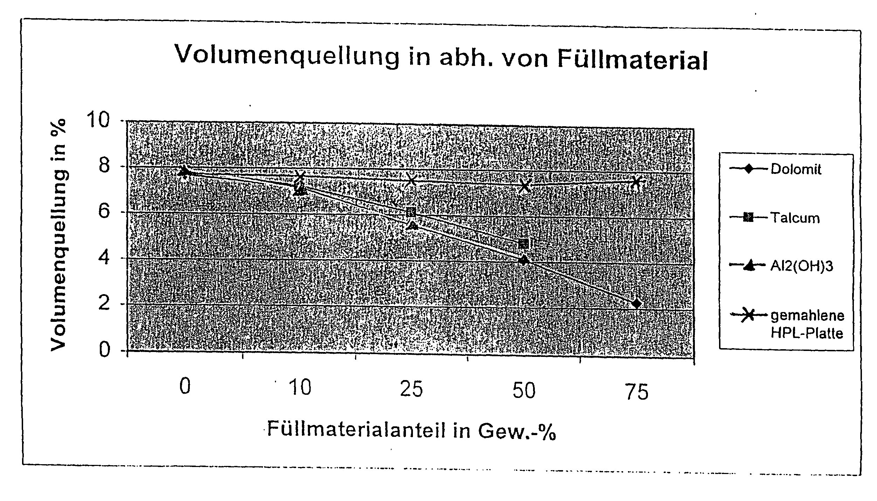

In der einzigen Figur ist die Volumenquellung in Abhängigkeit von dem Gewichtsprozentanteil des Füllmaterials in der Kernschicht der Platten für die verschiedenen Typen von Füllmaterial der Beispiele 1 bis 4 aufgetragen.


**Patentansprüche**

1. Dekorative Platte und/oder Formteil, insbesondere für Innen- und Außenanwendung an Gebäuden geeignet, aus einer ein-oder beidseitig mit einer Dekorschicht laminierten, gepressten ein- oder mehrlagigen Kernschicht aus Holz- und/oder Zellulosefasern oder Holzsägemehlprodukten, wobei die Fasern bzw. die Holzsägemehlprodukte mit einem Harz als Binder imprägniert und von dem hitzegehärteten Binder umgeben sind, und dass die Kernschicht ein Füllmaterial enthält, **dadurch gekennzeichnet daß** die Partikelgröße des Füllmaterials kleiner als die Dicke der Fasern oder der Holzsägemehlprodukte ist und im Bereich von 1 bis 250 $\mu$m liegt und dass die Kernschicht 25 bis 75 Gew.% Fasern oder Holzsägemehlprodukte, 20 bis 50 Gew.% Füllmaterial und 15 bis 35 Gew.% Harz, jeweils bezogen auf das Gesamtgewicht der Kernschicht, umfasst.

2. Dekorative Platte und/oder Formteil nach Anspruch 1, **dadurch gekennzeichnet, dass** das Füllmaterial thermisch stabil bis zu 200 °C, weder hydrolysierbar noch hygroskopisch ist und aus anorganischem oder organischem Material besteht..

3. Dekorative Platte und/oder Formteil nach Anspruch 1, **dadurch gekennzeichnet, dass** die Partikelgröße des Füllmaterials, im Bereich von 5 bis 50 $\mu$m liegt.

4. Dekorative Platte und/oder Formteil nach Anspruch 1, **dadurch gekennzeichnet, dass** das Füllmaterial aus einer Gruppe anorganischer Materialien auswählbar ist, die unter anderem Talkum, Kreide, Dolomit, Aluminiumhydroxid, Magnesiumhydroxid, Bariumsulfat, Perlit, Diatomit, Glimmer, Calciumkarbonat und Mischungen hiervon umfasst.

5. Dekorative Platte und/oder Formteil nach Anspruch 1, **dadurch gekennzeichnet, dass** das Füllmaterial aus organischen Materialien wie gemahlene HPL-Plattenreste, Sägemehl von HPL-Platten, das beim Plattenschneiden anfällt und/oder gemahlene gebrauchte HPL-Platten, Holzsägemehlprodukten, Holz- und/oder Zellulosefasern besteht.

6. Dekorative Platte und/oder Formteil nach Anspruch 1, **dadurch gekennzeichnet, dass** der Wassergehalt der Kernschicht vor dem Verpressen zu einem Prepeg zwischen 0,5 und 10 Gew.- %, insbesondere zwischen 1,5 und 2,5 Gew.%, bezogen auf das Gesamtgewicht der Kernschicht, beträgt.

7.  Dekorative Platte und/oder Formteil nach Anspruch 1, **dadurch gekennzeichnet, dass** die Wasseraufnahme der Platte mit steigendem Anteil des Füllmaterials und einem Harzanteil von 20 bis 25 Gew.% abnimmt.

8.  Dekorative Platte und/oder Formteil nach Anspruch 7, **dadurch gekennzeichnet, dass** die Volumenquellung der Platte bei einem Harzanteil von 20 bis 25 Gew.-% mit steigendem anorganischem Füllanteil abnimmt.

9.  Dekorative Platte und/oder Formteil nach Anspruch 7, **dadurch gekennzeichnet, dass** die Volumenquellung der Platte bei einem Harzanteil von 20 bis 25 Gew.% mit steigendem organischen Füllanteil nahezu konstant bleibt.

10. Dekorative Platte nach einem der Ansprüche 7 bis 9, **dadurch gekennzeichnet, dass** die Biegefestigkeit derPlatte miteinem Füllmaterialanteil bis zu 50 Gew.% maximal 20% niedriger als die Biegefestigkeit einer Platte ist, deren Kernschicht kein Füllmaterial enthält.

11. Verwendung der Platte und/oder des Formteils nach einem der Ansprüche 1-10 zur Außenverkleidung von Gebäuden in Form einer vorgehängten Fassade, Wand- und Dachblende, Brüstungsplatte oder Balkonverkleidung sowie zur Innenverkleidung von Wänden, Möbel, Naßräumen, Laboreinrichtungen.

**Claims**

1.  Decorative panel and/or formed part suitable in particular for internal and external use on buildings, comprising a pressed, single-layered or multi-layered core stratum of wood fibres and/or cellulose fibres or of products produced from wood sawdust, which core stratum is laminated to a decorative layer on one or both sides, the fibres or the products produced from wood sawdust being impregnated with a resin as a binder and being surrounded by the heat-cured binder, and the core stratum containing a filler material, **characterised in that** the particle size of the filler material is less than the thickness of the fibres or of the products produced from wood sawdust and is in the range from 1 to 250 $\mu$m, and **in that** the core stratum comprises 25 to 75% by weight of fibres or of products produced from wood sawdust, 20 to 50% by weight of filler material and 15 to 35% by weight of resin, each as a percentage of the total weight of the core stratum.

2.  Decorative panel and/or formed part according to claim 1, **characterised in that** the filler material is thermally stable up to 200°C, is neither hydrolysable nor hygroscopic and comprises inorganic or organic material.

3.  Decorative panel and/or formed part according to claim 1, **characterised in that** the particle size of the filler material is in the range from 5 to 50 $\mu$m

4.  Decorative panel and/or formed part according to claim 1, **characterised in that** the filler material can be selected from a group of inorganic materials which comprises, amongst others, talc, chalk, dolomite, aluminium hydroxide, magnesium hydroxide, barium sulphate, perlite, diatomite, mica, calcium carbonate, and mixtures thereof.

5.  Decorative panel and/or formed part according to claim 1, **characterised in that** the filler material comprises organic materials such as comminuted residues from sheets of HPL, sawdust from sheets of HPL which is produced when the sheets are cut, and/or comminuted used sheets of HPL, wood fibres and/or cellulose fibres, products produced from wood sawdust.

6.  Decorative panel and/or formed part according to claim 1, **characterised in that**, before it is pressed into a pre-preg, the water content of the core stratum is between 0.5 and 10% by weight, and in particular between 1.5 and 2.5% by weight, as a percentage of the total weight of the core stratum.

7.  Decorative panel and/or formed part according to claim 1, **characterised in that** the water absorption of the panel decreases as the proportion of filler material rises and when the proportion of resin is 20 to 25% by weight.

8.  Decorative panel and/or formed part according to claim 7, **characterised in that**, when the proportion of resin is 20 to 25% by weight, the volumetric swelling of the panel decreases as the proportion of inorganic filler rises.

9.  Decorative panel and/or formed part according to claim 7, **characterised in that**, when the proportion of resin is 20 to 25% by weight, the volumetric swelling of the panel remains almost constant as the proportion of organic filler rises.

**10.** Decorative panel and/or formed part according to one of claims 7 to 9, **characterised in that** the bending strength of a panel having a proportion of filler material of up to 50% by weight is a maximum of 20% less than the bending strength of a panel whose core stratum does not contain any filler material.

**11.** Use of the panel and/or formed part according to one of claims 1 to 10 for the external cladding of buildings in the form of a curtain-wall frontage, wall or roof facing, guard-rail panel or balcony cladding and for the internal cladding of walls, furniture, wet rooms, laboratory facilities.

**Revendications**

**1.** Panneau et/ou moulage décoratif, adapté en particulier à des applications intérieures et extérieures sur des bâtiments, composé d'une couche de noyau à une ou plusieurs couches, pressée, laminée d'un ou des deux côtés avec une couche de décor, en fibres de bois et/ou de cellulose ou en produits de sciure de bois, sachant que les fibres ou les produits de sciure de bois sont imprégnés d'une résine servant de liant et sont entourés du liant durci sous l'effet de la chaleur et sachant que la couche de noyau contient un matériau de remplissage, **caractérisé en ce que** la grandeur des particules du matériau de remplissage est inférieure à l'épaisseur des fibres ou des produits de sciure de bois et se situe dans la plage de 1 à 250 μm et **en ce que** la couche de noyau comporte 25 à 75 % en poids de fibres ou de produits de sciure de bois, 20 à 50 % en poids de matériau de remplissage et 15 à 35 % en poids de résine, respectivement par rapport au poids total de la couche de noyau.

**2.** Panneau et/ou moulage décoratif selon la revendication 1, **caractérisé en ce que** le matériau de remplissage est thermiquement stable jusqu'à 200°C, est ni hydrolysable, ni hygroscopique et se compose de matériau anorganique ou organique.

**3.** Panneau et/ou moulage décoratif selon la revendication 1, **caractérisé en ce que** la grandeur des particules du matériau de remplissage se situe dans la plage de 5 à 50 μm.

**4.** Panneau et/ou moulage décoratif selon la revendication 1, **caractérisé en ce que** le matériau de remplissage peut être sélectionné parmi un groupe de matériaux anorganiques qui comporte entre autres de la poudre de talc, de la craie, de la dolomite, de l'hydroxyde d'aluminium, de l'hydroxyde de magnésium, du sulfate de baryum, de la perlite, de la diatomite, du mica, du carbonate de calcium et des mélanges de ceux-ci.

**5.** Panneau et/ou moulage décoratif selon la revendication 1, **caractérisé en ce que** le matériau de remplissage se compose de matériaux organiques tels que des restes de panneau HPL broyé, de la sciure de panneaux HPL produite lors de la découpe des panneaux et/ou des panneaux HPL usagés broyés, des produits de sciure de bois, des fibres de bois et/ou de cellulose.

**6.** Panneau et/ou moulage décoratif selon la revendication 1, **caractérisé en ce que** la teneur en eau de la couche de noyau est comprise avant le pressage en un préimprégné entre 0,5 et 10 % en poids, en particulier entre 1,5 et 2,5 % en poids par rapport au poids total de la couche de noyau.

**7.** Panneau et/ou moulage décoratif selon la revendication 1, **caractérisé en ce que** l'absorption d'eau du panneau décroît avec la part croissante de matériau de remplissage et une part de résine de 20 à 25 % en poids.

**8.** Panneau et/ou moulage décoratif selon la revendication 7, **caractérisé en ce que** le gonflement en volume du panneau décroît pour une part de résine de 20 à 25 % en poids avec une part de produit de remplissage anorganique croissante.

**9.** Panneau et/ou moulage décoratif selon la revendication 7, **caractérisé en ce que** le gonflement en volume du panneau reste presque constant pour une part de résine de 20 à 25 % en poids avec une part de matériau de remplissage organique croissante.

**10.** Panneau et/ou moulage décoratif selon l'une quelconque des revendications 7 à 9, **caractérisé en ce que** la résistance à la flexion du panneau présentant une part de matériau de remplissage jusqu'à 50 % en poids au maximum est 20 % plus faible que la résistance à la flexion d'un panneau, dont la couche de noyau ne contient aucun matériau de remplissage.

**11.** Utilisation du panneau et/ou moulage décoratif selon l'une quelconque des revendications 1 à 10 pour le revêtement extérieur de bâtiments sous la forme d'une façade suspendue, de panneau pour mur et toit, d'allège ou de revêtement de balcon ainsi que pour le revêtement intérieur de murs, meubles, locaux humides, équipements de laboratoire.

Volumenquellung in abh. von Füllmaterial

Dolomit
Talcum
Al2(OH)3
gemahlene HPL-Platte

Volumenquellung in %

Füllmaterialanteil in Gew.-%

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 3673020 A
- DE 1912300 A
- EP 0081147 B
- US 503115 A4
- FR 1470329 A
- DE 10030658643